(19) Europäisches Patentamt

European Patent Office

Office européen des brevets

(11) **EP 1 296 866 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(21) Anmeldenummer: 01943503.1

(22) Anmeldetag: **13.06.2001**

(51) Int Cl.$^7$: **B60T 13/68**

(86) Internationale Anmeldenummer:
**PCT/EP2001/006700**

(87) Internationale Veröffentlichungsnummer:
**WO 2001/098122 (27.12.2001 Gazette 2001/52)**

(54) **ELEKTROHYDRAULISCHE BREMSANLAGE FÜR KRAFTFAHRZEUGE**

ELECTROHYDRAULIC BRAKE SYSTEM FOR MOTOR VEHICLES

SYSTEME DE FREINAGE ELECTROHYDRAULIQUE POUR AUTOMOBILES

(84) Benannte Vertragsstaaten:
**DE FR IT**

(30) Priorität: **20.06.2000 DE 10031010**

(43) Veröffentlichungstag der Anmeldung:
**02.04.2003 Patentblatt 2003/14**

(73) Patentinhaber: **Continental Teves AG & Co. oHG
60488 Frankfurt (DE)**

(72) Erfinder:
• **SCHUBERT, Peter
65203 Wiesbaden (DE)**
• **KLEIN, Andreas
61352 Bad Homburg (DE)**
• **FEY, Wolfgang
65527 Niedernhausen (DE)**
• **FACHINGER, Georg
65549 Limburg (DE)**

(56) Entgegenhaltungen:
DE-A- 19 502 925          DE-A- 19 843 220
GB-A- 2 349 676

**Beschreibung**

Die Erfindung betrifft eine elektrohydraulische Bremsanlage für Kraftfahrzeuge, die in einer Betriebsart "Brake-by-wire" sowohl vom Fahrzeugführer als auch unabhängig vom Fahrzeugführer ansteuerbar ist, und die in einer Rückfallbetriebsart betrieben werden kann, in der nur der Betrieb durch den Fahrzeugführer möglich ist, mit einer Einrichtung zur Erkennung des Fahrerverzögerungswunsches, einem mittels eines Bremspedals betätigbaren, mindestens einen Druckraum aufweisenden Notdruckgeber bzw. Hauptbremszylinder, einem mit dem Hauptbremszylinder zusammenwirkenden Wegsimulator, der durch die Betätigung des Hauptbremszylinders abschaltbar ist, einer hydraulischen Hilfsdruckquelle, mit deren Druck Radbremsen beaufschlagbar sind, die über mindestens eine mittels eines Trennventils absperrbare hydraulische Verbindung mit dem Hauptbremszylinder verbindbar sind, sowie einer elektronischen Steuer- und Regeleinheit.

Eine derartige elektrohydraulische Bremsanlage ist. Z. B. aus dem Fachartikel "Das elektro-hydraulische Bremssystem von Continental Teves - eine neue Herausforderung für die System- und Methodenentwicklung in der Serie", VDI Berichte Nr. 1547, 2000, bekannt. Die Trennventile werden bei der vorbekannten Bremsanlage bei der Betätigung des Bremspedals durch Steuersignale in ihre Schließstellung geschaltet, die von der elektronischen Steuer- und Regeleinheit erzeugt werden. Der Wegsimulator wird bei einem Ausfall der Steuer- bzw. Bordelektronik durch die Bewegung eines der Hauptzylinderkolben mechanisch abgesperrt, so daß der Wegsimulator bei der Betätigung des Hauptbremszylinders im Notbremsmodus kein Druckmittelvolumen aufnehmen kann.

Problematisch bei dem bekannten elektrohydraulischen Bremssystem ist die Zeit vom Beginn der Hauptzylinderbetätigung durch den Fahrer bis zum Schließen der Trennventile. Bei einer zu schnellen Hauptzylinderbetätigung kann sich der den Wegsimulator absperrende Hauptzylinderkolben zu weit bewegen, bevor die Trennventile geschlossen werden. Die Folge hiervon wäre, daß sich ein hartes Bremspedal einstellen würde, was den Fahrer irritieren könnte, und daß die Größe des Verzögerungswunsches nur noch über einen Drucksensor erfasst werden könnte.

Es ist daher Aufgabe der vorliegenden Erfindung, ein elektrohydraulisches Bremssystem der eingangs genannten Gattung vorzuschlagen, bei dem ein sehr schnelles Umschalten der Trennventile in die Schließstellung erfolgt.

Diese Aufgabe wird erfindungsgemäß dadurch gelöst, daß eine zusätzliche elektrische Schaltung vorgesehen ist, die bei Auftreten des Fahrerverzögerungswunsches das Trennventil unabhängig von der elektronischen Steuer- und Regeleinheit ansteuert. Die Reaktionszeit der elektrischen Schaltung ist dabei wesentlich kürzer als die der elektronischen Steuer- und Regeleinheit. Durch diese Maßnahmen wird ein weiterer Vorteil erreicht, der den Zustand betrifft, in dem das elektrohydraulische Bremssystem noch nicht initialisiert ist (z. B. durch Einschalten der Zündung, Türkontakt, Fernbedienung), der Fahrer jedoch das Bremspedal betätigt.

Zur Konkretisierung des Erfindungsgedankens ist vorgesehen, daß die elektrische Schaltung eine Auswerteschaltung zur Erkennung des Fahrerverzögerungswunsches aufweist, die der Freigabe der Ansteuerung plus der Ansteuerung des Trennventils dienen.

Eine vorteilhafte Weiterbildung des Erfindungsgegenstandes besteht darin, daß der Auswerteschaltung ein Zeitgeber nachgeschaltet ist, der ein Ansteuersignal für das Trennventil erzeugt und der nach Ablauf einer vorbestimmten Zeitdauer die Ansteuerung des Trennventils unterdrückt. Durch diese Maßnahme wird erreicht, daß das Trennventil nach einer festgesetzten Zeit abgeschaltet wird, so daß es bei nicht korrekter Funktion der Anlage nicht zu sicherheitskritischem Verhalten führt.

Eine zweite Sicherheitsfunktion kann dadurch realisiert werden, daß der elektronischen Steuer- und Regeleinheit eine Hardware-Überwachungsschaltung (Watchdog) nachgeschaltet ist, die bei einer Abweichung eines von der elektronischen Steuer- und Regeleinheit erzeugten dynamischen Zustandssignals von einem von der Hardware-Überwachungsschaltung (Watchdog) erzeugten Zustandssignal die Ansteuerung des Trennventils unterdrückt.

Die vorhin erwähnte Ansteuerung des Trennventils erfolgt dabei vorzugsweise mittels zweier Ansteuerlogikschaltungen, die einem Sicherheitsschalter sowie einem Trennventiltreiber zugeordnet sind, die mit dem Trennventil in Reihe geschaltet sind.

Die Erfindung wird in der nachfolgenden Beschreibung an einem Ausführungsbeispiel unter Bezugnahme auf die beiliegende Zeichnung näher erläutert. In der Zeichnung zeigen:

Fig. 1    ein vereinfachtes Schaltbild einer elektrohydraulischen Bremsanlage gemäß der Erfindung, und

Fig. 2    ein vereinfachtes Schaltbild der erfindungsgemäßen elektrischen Schaltung zur Ansteuerung der Trennventile.

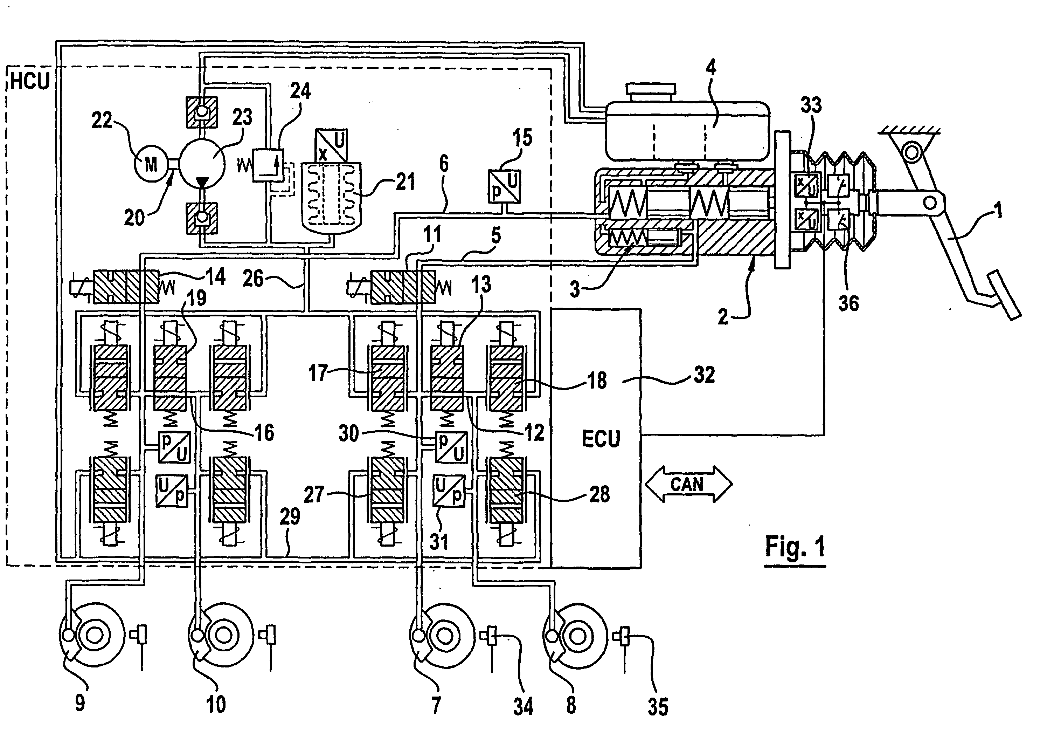

Die in Fig. 1 dargestellte, elektrohydraulische Bremsanlage besteht aus einem mittels eines Betätigungspedals 1 betätigbaren, zweikreisigen Hauptbremszylinder bzw. Tandemhauptzylinder 2, der mit einem Pedalwegsimulator 3 zusammenwirkt und zwei mittels zweier Hauptzylinderkolben voneinander getrennte Druckräume aufweist, die mit einem drucklosen Druckmittelvorratsbehälter 4 in Verbindung stehen. Eine Verbindung zwischen Wegsimulator 3 und Druckmittelvorratsbehälter 4 wird bei der Bewegung des nicht näher bezeichneten zweiten Hauptzylinderkolbens mittels einer nicht dargestellten Ventileinrichtung abgesperrt.

An den ersten Druckraum (Primärdruckraum) sind mittels einer absperrbaren ersten hydraulischen Leitung 5 beispielsweise der Vorderachse zugeordnete Radbremsen 7,8 angeschlossen. Das Absperren der Leitung 5 erfolgt mittels eines ersten Trennventils 11, während in einem zwischen den Radbremsen 7, 8 geschalteten Leitungsabschnitt 12 ein elektromagnetisch betätigbares, vorzugsweise stromlos offenes (SO) Druckausgleichsventil 13 eingefügt ist, das bei Bedarf eine radindividuelle Bremsdruckregelung ermöglicht.

Der zweite Druckraum des Hauptbremszylinders 2, an den ein Drucksensor 15 angeschlossen sein kann, ist über eine mittels eines zweiten Trennventils 14 absperrbare zweite hydraulische Leitung 6 mit dem anderen, der Hinterachse zugeordneten Radbremsenpaar 9, 10 verbindbar. In einem zwischen den Radbremsen 9, 10 geschalteten Leitungsabschnitt 16 ist wieder ein elektromagnetisch betätigbares, vorzugsweise stromlos offenes (SO) Druckausgleichsventil 19 eingefügt. Da der Aufbau des an den zweiten Druckraum des Hauptbremszylinders 2 angeschlossenen hydraulischen Kreises identisch dem des in der vorstehenden Beschreibung erläuterten Bremskreises 11 entspricht, braucht er im nachfolgenden Text nicht mehr erörtert zu werden.

Wie der Zeichnung weiter zu entnehmen ist, ist ein als Fremddruckquelle dienendes Motor-Pumpen-Aggregat 20 mit einem Hochdruckspeicher 21 vorgesehen, das seinerseits aus einer mittels eines Elektromotors 22 angetriebenen Pumpe 23 sowie einem der Pumpe 23 parallel geschalteten Druckbegrenzungsventil 24 besteht. Die Saugseite der Pumpe 23 ist über ein Rückschlagventil 24 an den vorhin erwähnten Druckmittelvorratsbehälter 4 angeschlossen. Der von der Pumpe 23 aufgebrachte hydraulische Druck kann von einem nicht dargestellten Drucksensor überwacht werden.

Eine dritte hydraulische Leitung 26 verbindet den Hochdruckspeicher 21 mit den Eingangsanschlüssen von zwei elektromagnetisch analog ansteuerbaren, stromlos geschlossenen 2/2-Wegeventilen 17, 18, die als Einlaßventile den Radbremsen 7 und 8 vorgeschaltet sind. Außerdem sind die Radbremsen 7, 8 über je ein elektromagnetisch analog ansteuerbares, stromlos geschlossenes 2/2-Wegeventil bzw. Auslaßventil 27, 28 an eine vierte hydraulische Leitung 29 angeschlossen, die andererseits mit dem drucklosen Druckmittelvorratsbehälter 4 in Verbindung steht. Der in den Radbremsen 7, 8 herrschende hydraulische Druck wird mit Hilfe je eines Drucksensors 30, 31 ermittelt.

Der gemeinsamen Ansteuerung des Motor-Pumpen-Aggregats 20 sowie der Elektromagnetventile 11,13,14,17,18,19,27,28 dient eine elektronische Steuer- und Regeleinheit (ECU) 32, der als Eingangssignale die Ausgangssignale eines mit dem Betätigungspedal 1 zusammenwirkenden Betätigungswegsensors 33 sowie des vorhin erwähnten Drucksensors 15 zugeführt werden und die eine Fahrerverzögerungswunscherkennung ermöglichen. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuer- und Regeleinheit (ECU)32 die Ausgangssignale der Drucksensoren 30, 31 sowie die von lediglich schematisch angedeuteten Raddrehzahlsensoren zugeführt, wobei die den Radbremsen 7,8 zugeordneten Raddrehzahlsensoren mit den Bezugszeichen 34,35 versehen sind. Außerdem empfängt die Steuer- und Regeleinheit (ECU) 32 Signale einer zusätzlichen elektrischen Schaltung 36, die einer von der Steuer- und Regeleinheit (ECU)32 unabhängigen, schnellen Ansteuerung der Trennventile 11, 14 dient.

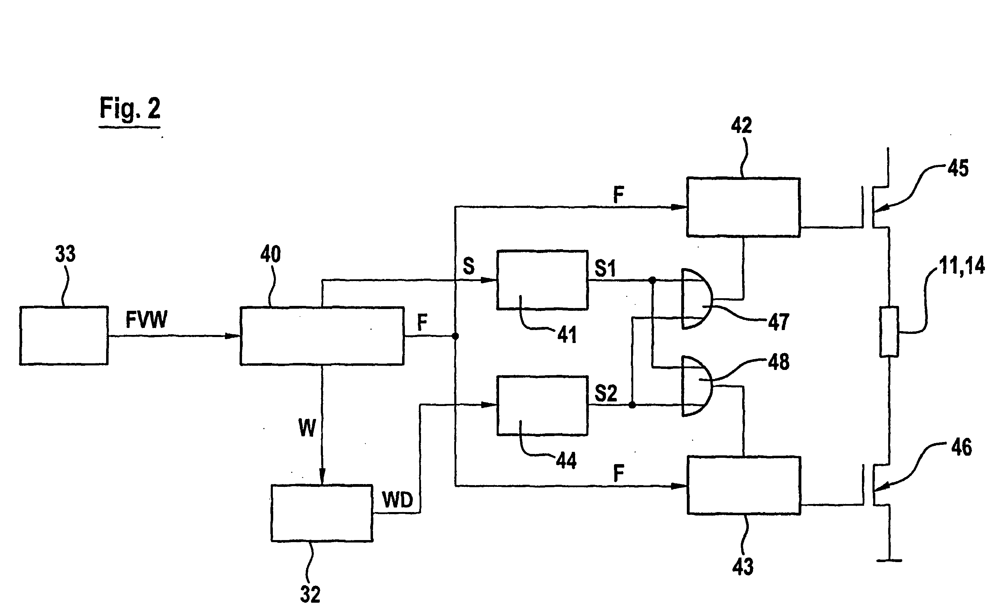

Der Aufbau der im Zusammenhang mit Fig. 1 erwähnten elektrischen Schaltung 36 ist aus Fig. 2 ersichtlich. Dem darin dargestellten Schaltplan ist zu entnehmen, daß das den Fahrerverzögerungswunsch repräsentierende Signal FVW des Betätigungswegsensors 33 einer Auswerteschaltung 40 zugeführt wird, die ein Startsignal S zum Aktivieren eines Zeitgebers 41, ein Freigabesignal F für eine erste Ansteuerlogik-schaltung 42 und eine zweite Ansteuerlogikschaltung 43 sowie ein Wecksignal W zum "Wecken" der Steuer- und Regeleinheit (ECU) 32 erzeugt. Die erste Ansteuerlogik-schaltung 42 ist einem.Sicherheitsschalter 45 zugeordnet, während die zweite Ansteuerlogikschaltung 43 der Ansteuerung eines Trennventiltreibers 46 dient, wobei sowohl der Sicherheitsschalter 45 als auch der Trennventiltreiber 46 mit der anzusteuernden Spule des entsprechenden Trennventils 11, 14 in Reihe geschaltet sind. Der Zeitgeber 41, der eine feste Zeitvorgabe beinhaltet, dient der zeitlichen Begrenzung der Aktivierung der Ansteuerlogikschaltungen 42, 43 derart, daß er nach dem Ablauf der vorgegebenen Zeit ein Sperrsignal S1 zum Abschalten der Ansteuerlogikschaltungen 42, 43 erzeugt. Die Ansteuerung der Trennventile 11, 14 wird dann von der elektronischen Steuer- und Regeleinheit 32 übernommen.

Sollte der Zeitgeber 41 defekt sein, so ist eine zweite Sicherheitsfunktion notwendig, die bei einer fehlerhaften Funktion des Systems die Trennventile 11, 14 wieder abschaltet. Die zweite Sicherheitsfunktion kann beispielsweise durch einen zweiten bzw. redundanten Zeitgeber gewährleistet werden. Eine andere Lösung besteht in der Verwendung einer der Steuer- und Regeleinheit (ECU) 32 nachgeschalteten Hardware-Überwachungsschaltung (Watchdog) 44. Der Hardware-Überwachungsschaltung (Watchdog) 44 wird ein von der Steuerund Regeleinheit (ECU) 32 erzeugtes dynamisches Statussignal WD zugeführt, das Informationen über den Zustand der Steuerund Regeleinheit (ECU) 32 enthält und in der Hardware-Überwachungsschaltung (Watchdog) 44 mit einem intern erzeugten Statussignal zeitlich und wertmäßig verglichen wird. Stimmen die erwähnten Statussignale nicht überein, erzeugt die Hardware-Überwachungsschaltung (Watchdog) 44 ein zweites Sperrsignal S2 zum Abschalten der Ansteuerlogikschaltungen 42, 43. Die beiden Sperrsignale S1, S2 werden vorzugsweise als Eingangssignale einem Paar logischer ODER-Gatter 47, 48 zugeführt, durch deren Ausgangssignale die Ansteuerlogikschaltungen 42, 43 gesperrt werden.

Nach dem zuvor beschriebenen Ausführungsbeispiel werden aus bestimmten Gründen die Trennventile 11, 14 der beiden hydraulischen Kreise von der Ansteuerschaltung betätigt. Grundsätzlich wäre es ausreichend, nur das Trennventil 14, das von dem Sekundärdruckraum zu den Radbremsen 9, 10 führt, anzusteuern.

**Patentansprüche**

1. Elektrohydraulische Bremsanlage für Kraftfahrzeuge, die in einer Betriebsart "Brake-by-wire" sowohl vom Fahrzeugführer als auch unabhängig vom Fahrzeugführer ansteuerbar ist, und die in einer Rückfallbetriebsart betrieben werden kann, in der nur der Betrieb durch den Fahrzeugführer möglich ist, mit
   einer Einrichtung zur Erkennung des
   Fahrerverzögerungswunsches (15, 33),
   einem mittels eines Bremspedals (1) betätigbaren, mindestens einen Druckraum aufweisenden Notdruckgeber bzw. Hauptbremszylinder (2),
   einem mit dem Hauptbremszylinder (2) zusammenwirkenden Wegsimulatol (3), der durch die Betätigung des Hauptbremszylinders (2) abschaltbar ist,
   einer hydraulischen Hilfsdruckquelle (20, 21), mit deren Druck Radbremsen (7, 8, 9, 10) beaufschlagbar sind, die über mindestens eine mittels eines Trennventils (11, 14) absperrbare hydraulische Verbindung mit dem Hauptbremszylinder (2) verbindbar sind, sowie
   einer elektronischen Steuer- und Regeleinheit (32), mit der das mindestens eine Trennventil (11, 14) angesteuert wird **dadurch gekennzeichnet, daß** eine zusätzliche elektrische Schaltung (36) vorgesehen ist, die bei Auftreten des Fahrerverzögerungswunsches das Trennventil (11,14) unabhängig von der elektronischen Steuer- und Regeleinheit (32) ansteuert.

2. Elektrohydraulische Bremsanlage nach Anspruch 1 **dadurch gekennzeichnet, daß** die Reaktionszeit der elektrischen Schaltung (36) wesentlich kürzer ist als die der elektronischen Steuer- und Regeleinheit (32).

3. Elektrohydraulische Bremsanlage nach Anspruch 1 oder 2 **dadurch gekennzeichnet, daß** die elektrische Schaltung (36) eine Auswerteschaltung (40) zur Erkennung des Fahrerverzögerungswunsches (FVW) aufweist, die der Freigabe der Ansteuerung des Trennventils (11,14) dient.

4. Elektrohydraulische Bremsanlage nach Anspruch 3 **dadurch gekennzeichnet, daß** der Auswerteschaltung (40) ein Zeitgeber (41) nachgeschaltet ist, der nach Ablauf einer vorbestimmten Zeitdauer die Ansteuerung des Trennventils (11,14) abschaltet.

5. Elektrohydraulische Bremsanlage nach Anspruch 3 oder 4 **dadurch gekennzeichnet, daß** der elektronischen Steuerund Regeleinheit (32) eine Hardware-Überwachungsschaltung (Watchdog 44) nachgeschaltet ist, die bei einer Abweichung eines von der elektronischen Steuer- und Regeleinheit (44) erzeugten dynamischen Zustandssignals (WD) von einem von der Hardware-Überwachungsschaltung (Watchdog 44) erzeugten Zustandssignal die Ansteuerung des Trennventils (11,14) abschaltet.

6. Elektrohydraulische Bremsanlage nach einem der Ansprüche 1 bis 5 **dadurch gekennzeichnet, daß** die Ansteuerung des Trennventils (11,14) mittels zweier Ansteuerlogikschaltungen (42, 43) erfolgt, die einem Sicherheitsschalter (45) sowie einem Trennventiltreiber (46) zugeordnet sind, die mit dem Trennventil (11,14) in Reihe geschaltet sind.

**Claims**

1. Electro-hydraulic brake system for motor vehicles which is controllable in a 'brake-by-wire' operating mode by the vehicle operator as well as independently of the vehicle operator, and which can be operated in a back-up operational mode where only operation by the vehicle operator is possible, including
   a device for detecting the driver's deceleration demand (15, 33),
   an emergency pressure generator or, respectively, master brake cylinder (2) that is operable by means of a brake pedal (1) and has at least one pressure chamber,
   a travel simulator (3) that cooperates with the master brake cylinder (2) and can be disconnected by actuation of the master brake cylinder (2),

a hydraulic auxiliary pressure source (20, 21) whose pressure is used to act upon wheel brakes (7, 8, 9, 10) that are connectable to the master brake cylinder (2) by way of at least one hydraulic connection closable by means of a separating valve (11, 14), as well as

an electronic control and regulating unit (32) by which the at least one separating valve (11, 14) is actuated, **characterized in that** an additional electric circuit (36) is provided to actuate the separating valve (11, 14) independently of the electronic control and regulating unit (32) as the driver's deceleration demand occurs.

2. Electro-hydraulic brake system as claimed in claim 1,
**characterized in that** the reaction time of the electric circuit (36) is considerably shorter than that of the electronic control and regulating unit (32).

3. Electro-hydraulic brake system as claimed in claim 1 or 2,

characterized in that the electric circuit (36) includes an evaluating circuit (40) for detecting the driver's deceleration demand (DDD) that serves to enable the actuation of the separating valve (11, 14).

4. Electro-hydraulic brake system as claimed in claim 3,
**characterized in that** connected downstream of the evaluating circuit (40) is a timer (41) that disables the actuation of the separating valve (11, 14) upon expiry of a predetermined duration.

5. Electro-hydraulic brake system as claimed in claim 3 or 4,
**characterized in that** a hardware monitoring circuit (watchdog 44) is connected downstream of the electronic control and regulating unit (32), said monitoring circuit disabling the actuation of the separating valve (11, 14) in the event of a dynamic status signal (WD) produced by the electronic control and regulating unit (44) differing from a status signal produced by the hardware monitoring circuit (watchdog 44).

6. Electro-hydraulic brake system as claimed in any one of claims 1 to 5,
**characterized in that** the actuation of the separating valve (11, 14) is effected by means of two actuation logic circuits (42, 43) being associated with a safety switch (45) and a separating valve driver (46) connected in series with the separating valve (11, 14).

## Revendications

1. Système de freinage électro-hydraulique pour véhicules automobiles, qui peut être commandé dans un mode de fonctionnement « brake-by-wire » aussi bien par le conducteur du véhicule qu'indépendamment de celui-ci, et qui peut fonctionner dans un mode d'abandon dans lequel seul le fonctionnement par le conducteur est possible, comportant
un dispositif pour reconnaître la volonté de ralentir du conducteur (15, 33),
un transducteur de pression d'urgence ou cylindre de frein principal (2) comportant au moins une chambre sous pression et pouvant être actionné au moyen d'une pédale de frein (1),
un simulateur de course (3) coopérant avec le cylindre de frein principal (2) et qui peut être deconnecté par l'actionnement du cylindre de frein principal (2),
une source de pression auxiliaire hydraulique (20, 21) dont la pression peut agir sur des freins des roues (7, 8, 9, 10), lesquels peuvent être reliés au cylindre de frein principal (2), par au moins une liaison hydraulique pouvant être fermée au moyen d'une soupape de séparation (11, 14) ; ainsi que
une unité électronique de commande et de régulation (32) au moyen de laquelle la ou les soupapes de séparation (11, 14) sont commandées,
**caractérisé en ce qu'**il est prévu un circuit électrique (36) supplémentaire qui, lorsque se manifeste la volonté de ralentir du conducteur, commande la soupape de séparation (11, 14) indépendamment de l'unité électronique de commande et de régulation (32).

2. Système de freinage électro-hydraulique selon la revendication 1, **caractérisé en ce que** le temps de réaction du circuit électrique (36) est sensiblement plus court que celui de l'unité électronique de commande et de régulation (32).

3. Système de freinage électro-hydraulique selon la revendication 1 ou 2, **caractérisé en ce que** le circuit électrique (36) comporte un circuit d'évaluation (40) pour reconnaître la volonté de ralentir du conducteur (FVW), qui sert à autoriser la commande de la soupape de séparation (11, 14).

4. Système de freinage électro-hydraulique selon la revendication 3, **caractérisé en ce qu'**en aval du circuit d'évaluation (40) est montée une horloge (41) qui, à l'expiration d'une durée prédéterminée, coupe la commande de la soupape de séparation (11, 14).

5. Système de freinage électro-hydraulique selon la revendication 3 ou 4, **caractérisé en ce qu'**en aval de l'unité électronique de commande et de régulation (32) est couplé un circuit de surveillance matériel (watchdog 44) qui, en cas d'écart d'un signal d'état dynamique (WD) produit par l'unité électronique de commande et de régulation (44), par rapport à un signal d'état produit par le circuit de surveillance matériel (watchdog 44), coupe la commande de la soupape de séparation (11, 14).

6. Système de freinage électro-hydraulique selon l'une des revendications 1 à 5, **caractérisé en ce que** la commande de soupape de séparation (11, 14) s'effectue au moyen de deux circuits logiques de commande (42, 43) qui sont associés à un interrupteur de sécurité (45) ainsi qu'à un excitateur de soupape de séparation (46) qui est couplé en série avec la soupape de séparation (11, 14).

**Fig. 1**

HCU

ECU

CAN

EP 1 296 866 B1

Fig. 2